Europäisches Patentamt

European Patent Office

Office européen des brevets

(11) Publication number: 0 393 793
A1

# EUROPEAN PATENT APPLICATION

(21) Application number: 90200979.4

(22) Date of filing: 19.04.90

(51) Int. Cl.5: G08B 3/10, H04Q 7/02

(30) Priority: 20.04.89 NL 8901000

(43) Date of publication of application:
24.10.90 Bulletin 90/43

(84) Designated Contracting States:
DE FR GB NL

(71) Applicant: Ericsson Paging Systems B.V.
Nautilusstraat 3
NL-7821 AG Emmen(NL)

(72) Inventor: Gaykema, Bernardus Theodorus
Augustinus
56, Fuik
1141 CK Monnickendam,(NL)

(74) Representative: van der Arend, Adrianus G.A.,
Ir. et al
EXTERPATENT B.V. P.O. Box 90649
NL-2509 LP The Hague(NL)

(54) In a paging system a method for transmission of a message and after receipt thereof display thereof, and a paging system suitable for use of this method.

(57) Paging system comprising a central transmitter and a number of portable paging receivers. By suitable command of the central transmitter by input means the transmitter is able to transmit a transmission signal which comprises an address, a message destination data and a message. If a paging receiver receives such transmission signal and the address contained therein is identical to an address allocated and stored in advance in a memory of said receiver the receiver may store the message contained in said transmission signal in a specific reserved memory location determined by the message destination data contained in said transmission signal. Each of a number of such memory locations of the receiver is intended to be allocated to a specific message type. Any message stored in the receiver memory can be selected to be displayed.

FIG. 1.

**In a paging system a method for transmission of a message and after receipt thereof display thereof, and a paging system suitable for use of this method.**

The invention relates to a method for transmitting a message and for displaying a message after receipt, in a personal paging system, said method comprising the compilation of a report which comprises a report destination code, assigned to a receiver belonging to the system, and the message, the transmission, by means of a transmitter belonging to the system, of a transmission signal comprising the report, the separating, in the receiver, of the report from a transmission signal received by the receiver, the separating from the report of component parts thereof, the comparison of a received report destination code with a report destination code stored in the receiver and, if the comparison was successful, the processing in the receiver of the remainder of the received report, the processing comprising the storage of the received message in a location of a memory and the selective display of one message from a number of stored messages on a screen of the receiver, depending on a receiver setting made by a user of the receiver.

A method of this type is known in practice. With the known method it is possible to store a number of messages in the memory of the receiver and selectively to display and selectively to delete these messages. Each message received is stored in the same memory location, earlier messages being been moved up one location.

The known method has the disadvantage that if the section of the memory available for the storage of the messages is completely full, the oldest message stored in the memory is pushed out of the memory when a new message is received and consequently is lost, irrespective of the importance of the message. Another significant disadvantage is that each message can be in any message memory location and consequentlty cannot be continuously selectively displayed. Furthermore, important messages of a type which is received less frequently than less important messages of a different type can be supplanted as a consequence of the limited storage capacity of the memory. As a consequence, undesired and, depending on the application of the personal paging system, unsafe situations can arise.

The aim of the invention is to overcome the disadvantages of the known method.

This object is achieved according to the invention for the method of the type mentioned in the preamble, by, during the compilation of the report, selectively adding to the report a message destination code, the value of which is dependent on the type of message in the report, and, during the processing of the remainder of the report in the receiver and on receipt of a message destination code, storing the received message in a reserved message location corresponding to the value of the message destination code. As a consequence, each reserved messsage location always contains the last-received message of a particular type. By storing messages of a type which occurs frequently in a reserved memory location assigned to this type, the deletion from the memory of other messages of a type which is received less frequently is prevented.

According to a preferred embodiment, the settings to be made comprise a setting in which the receiver is set such that the contents of a chosen reserve memory location are essentially continuously displayed and this display is interrupted for a predetermined period to display the message of a report which was received after making the setting and for which the comparison was successful. By this means information of a certain type, which is stored in a corresponding reserved memory location, can be followed continuously. This information can be, for example, the exchange rate for a currency in the case of use in a stock exchange, or a measurement parameter for a process or installation in a factory.

The invention also relates to a personal paging system according to claims 4 to 6 inclusive for carrying out the method according to the invention.

The invention is illustrated with reference to the drawings. In the drawings:

Fig. 1 shows schematically one embodiment of a personal paging system according to the invention;

Figures 2a to 2e inclusive show schematically examples of reports to be transmitted in the system; and

Fig. 3 shows a flow diagram for a storage function according to the invention.

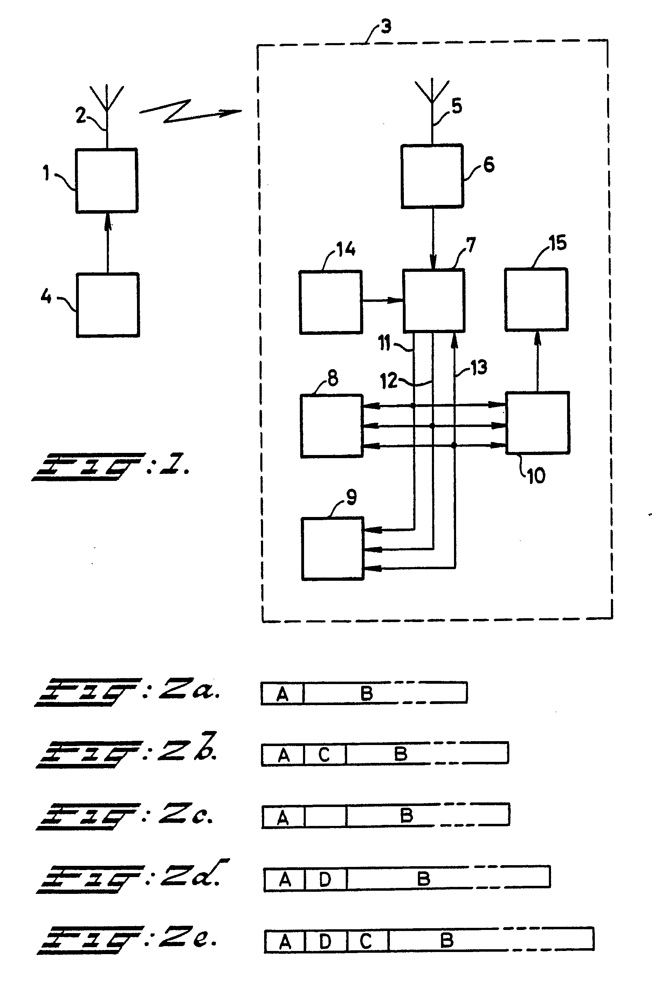

The personal paging system shown in Fig. 1 comprises a transmitter 1 with an aerial 2 and a number of portable receivers 3.

The block indicated by the reference number 4 represents report input means, which, for example, can comprise a computer and a telephone dialling system. The input means 4 are suitable for compiling a report which, after modulation by the transmitter 1, is transmitted by means of a transmission signal.

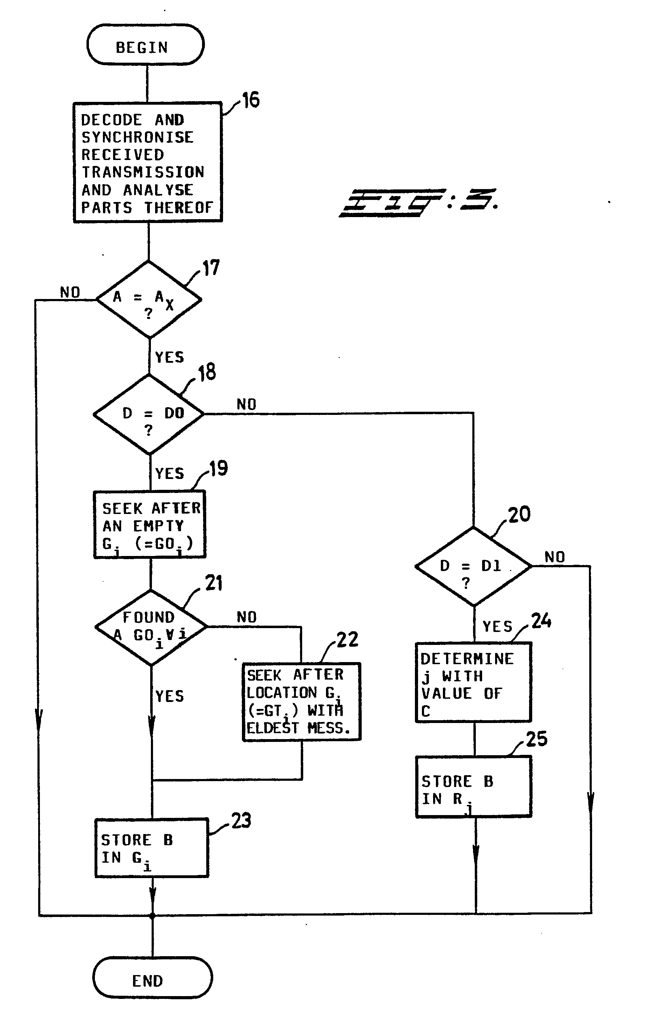

As shown in Fig. 2a, the report can consist of a report destination code A and a message B. Although not shown in Fig. 2, the reports, as known per se, can comprise an actuating prefix, synchronization data and error checking data.

As indicated in Fig. 2b, a report can also comprise a message destination code C for the storage of the message B in a location, corresponding to the value of the destination code C, in a memory of the receiver 3. For transmitting a message of a report of the type according to Fig. 2a it is also possible, if appropriate, to choose a report according to Fig. 2c, in which the value of the part of the report that corresponds to the part for the message destination code C of the report of Fig. 2b corresponds to a predetermined value from which it follows that the message B of the report of Fig. 2c does not have to be stored in a reserved memory location.

Fig. 2d shows a report to which, relative to Fig. 2a, code D has been added from which it can be seen whether the report contains a message which must be stored in a reserved memory location. In principle, the report of Fig. 2d corresponds to the report of Fig. 2c.

Fig. 2e shows schematically a report of the type to which, for a corresponding value of the code D, a message destination code C has been added for storing the message B in a reserved memory location.

If, for the personal paging system, all transmitted messages B have the same length and if the receiver 3 is suitable for detecting the length of a report, the system can suffice with the use of reports of the types shown in Figures 2a and 2b. However, it is also possible to use other combinations of the types shown in Fig. 2.

The receiver 3 comprises an aerial 5 which is connected to an input of a receiver circuit 6 which separates the report from a received transmission signal and supplies the report in serial binary form to an input of a control circuit 7.

The receiver 3 compares the received report destination code A with a report destination code assigned to the receiver 3 and stored in a read-only memory (ROM) 8 or in a random access memory (RAM) 9. The memories 8 and 9 and a display control circuit 10 are connected to the control circuit 7 via a control bus 11, an address bus 12 and a data bus 13.

The ROM 8 serves for storing therein a control program for carrying out the various functions of the receiver 3.

If the comparison made by the control circuit 7 between the received and stored report destination code was successful, the report is further processed. During this processing, if the report does not contain a message destination code C, the message B is stored in a known manner in a "normal" portion of the RAM 9. However, if the report contains a message destination code C, the message B is stored in a location of the RAM 9 which corresponds to the value of the a message destination code C, so that this location is reserved for messages B of a predetermined type.

By means of the adjusting elements 14, connected to the control circuit 7, and the control circuit 7, a location of the RAM 9 intended for the storage of a message can be selected for displaying the message stored in the chosen location via the control circuit 10 on a display unit 15 connected to the circuit 10.

The control circuit 7 is preferably suitable for enabling a reserved memory location to be chosen by means of the adjusting elements 14 and for essentially continuously displaying the contents thereof.

According to a further embodiment it is possible to interrupt the essentially continuous display of the contents of a reserved memory location for a predetermined period, for example 24 s, to display the message from a report which is intended for the receiver 3 and is received during the essentially continuous display of the contents of the reserved memory location.

In a practical embodiment, the "normal" portion of the RAM 9 comprises eight locations for storing eight messages in a time-dependent sequence and one "reserved" portion comprises eight reserved locations for storing therein eight messages of eight different types and each of which are received by means of a report containing a message destination code C with a value corresponding to the message type.

Moreover, in a practical embodiment of the receiver 3 32 characters can be displayed at the same time with the display unit 15. By this means it is, for example, possible, with a single display, to monitor a number of measurement parameters or currency exchange rates at the same time, all of which are stored in the same reserved memory location and, if appropriate, are continually updated without other portions of the memory 9 being influenced as a result.

It is pointed out that, as known per se, a report can contain a bleep code alongside a message B. On receipt of a bleep code, the receiver 3 can, depending on the value of the bleep code, where appropriate give a bleep tone by means of a sound generator, which is not shown, connected to the control circuit 7, the rhythm, the bleep length and the total duration of said bleep tone corresponding to the said value. This can be used, for example, if a measurement parameter is monitored by means of the system according to the invention and a bleep code is appended to the report if this parameter exceeds a predetermined limit, in order to warn the user of the receiver 3 by means of an audible signal that the limit has been exceeded.

Fig. 3 shows a flow diagram of a storage function for received messages as can be formed according to the invention. In this flow diagram:

A = report destination code of a received report

$A_x$ = report destination code assigned to personal paging receiver X

B = message in received report

C = message destination code in received report

D = message type code in received report

DO = value of D for report according to Fig. 2d

D1 = value of D for report according to Fig. 2e

$G_i$ = "normal" memory location, i = 1 ..... M

$GO_i$ = "normal" memory location $G_i$ is empty

$GT_i$ = "normal" memory location $G_i$ contains oldest message of all $G_i$'s

$R_j$ = "reserved" memory location, j = 1 ..... N

In the block 16 of the flow diagram a received report is first decoded and synchronized and the parts thereof are analyzed. If, in block 17, the report destination code A is identical to the report destination code assigned to the receiver X the operation proceeds to block 18; otherwise it proceeds to the end of the function. If, in block 18, the message type code D received with the report has the value DO, which signifies that the received message does not have to be stored in a reserved memory location, the operation proceeds to block 19; otherwise it proceeds to block 20. In block 19 empty memory location $GO_i$ is sought which is intended for storage of a "normal" message. If, in block 21, an empty location has been found the operation proceeds directly to block 23; otherwise, if an empty location has not been found, the operation proceeds indirectly via block 22 to block 23. In block 22 the normal memory location $GT_i$ containing the oldest message is sought. After a normal memory location $G_i$ has been found, the received message B is then stored in this location $G_i$, in block 23, as the final step of the function.

If, in block 20, it is found that the received message type code D also does not have the value D1, the report is corrupted or not intended for the receiver X and the operation proceeds to the end of the function. If the received message type code has the value D1, a message destination code C follows the received message type code D and, in block 24, an index j for a reserved memory location is determined with the aid of the value of C. Subsequently, and as the final step of the function, in block 25, the received message B is stored in the reserved message location $R_j$.

Because various functions can be developed for the method of display, an explanation of a specific function has been dispensed with. However, it is important to note that, according to the invention, it is possible selectively and essentially continuously to display the contents of a chosen reserved memory location, and thus information of a predetermined type.

It is emphasized that the method according to the invention can be physically implemented in various ways, for example with or without microprocessor, and that the embodiment of a personal paging system which is explained with reference to Fig. 1 and in which this method is used serves only as an example.

## Claims

1. Method for transmitting a message and for displaying a message after receipt, in a personal paging system, said method comprising the compilation of a report which comprises a report destination code, assigned to a receiver belonging to the system, and the message, the transmission, by means of a transmitter belonging to the system, of a transmission signal comprising the report, the separating, in the receiver, of the report from a transmission signal received by the receiver, the separating from the report of component parts thereof, the comparison of a received report destination code with a report destination code stored in the receiver and, if the comparison was successful, the processing in the receiver of the remainder of the received report, the processing comprising the storage of the received message in a location of a memory and the selective display of one message from a number of stored messages on a screen of the receiver, depending on a receiver setting made by a user of the receiver, characterized in that by, during the compilation of the report, selectively adding to the report a message destination code, the value of which is dependent on the type of message in the report, and, during processing of the remainder of the report in the receiver and on receipt of a message destination code, storing the received message in a reserved message location corresponding to the value of the a message destination code.

2. Method according to Claim 1, characterized in that the settings to be made comprise the setting in which the receiver is set such that the contents of a chosen reserve memory location are essentially continuously displayed.

3. Method according to Claim 2, characterized in that the essentially continuous display of the contents of a reserved message location is interrupted for a predetermined period to display the message of a report which was received after making the setting and for which the comparison was successful.

4. Personal paging system, comprising a transmitter and at least one portable receiver, the transmitter being suitable for transmitting, by means of a transmission signal, a report which is compiled by report input means connected to the transmitter and which comprises a report destination code, assigned to the receiver, and a message to be displayed, and the receiver comprising means for receiving the transmission signal, for separating the report from the transmission signal and for separating from the report component parts thereof, a memory device for pre-storage of a report destination code assigned to the receiver and, connected to a control circuit, a comparator for comparing a received report destination code with the stored report destination code, a memory for storing the received message if the comparison was successful, setting elements, to be operated by a user of the receiver, for making a setting of the receiver, and a screen for the selective display, depending on the setting made, of one message from a number of stored messages, characterized in that the report input means are suitable for selectively adding a message destination code to a report to be transmitted and in that the control circuit of the receiver is suitable for detecting a message destination code in a received report and for storing a message from a report containing a detected message destination code in a reserved memory location corresponding to the value of the detected message destination code.

5. System according to Claim 4, characterized in that the control circuit is suitable for the essentially continuous display on the screen, at a predetermined setting of the control circuit, of the contents of a reserved memory location to be chosen by means of the setting elements.

6. System according to Claim 5, characterized in that the essentially continuous display of the contents of a reserved memory location is interrupted for a predetermined period by the display of the message from a report which was received after making the setting and for which the comparison was successful.

FIG:1.

FIG:2a.

FIG:2b.

FIG:2c.

FIG:2d.

FIG:2e.

BEGIN

16 — DECODE AND
SYNCHRONISE
RECEIVED
TRANSMISSION
AND ANALYSE
PARTS THEREOF

_Fig:3._

17
$A = A_X$
?

NO

YES

18
$D = DO$
?

NO

YES

19 — SEEK AFTER
AN EMPTY
$G_i \ (=GO_i)$

20
$D = D1$
?

NO

YES

21
FOUND
A $GO_i \forall i$

NO

24 — DETERMINE
$j$ WITH
VALUE OF
$C$

22 — SEEK AFTER
LOCATION $G_i$
$(=GT_i)$ WITH
ELDEST MESS.

YES

25 — STORE B
IN $R_j$

23 — STORE B
IN $G_i$

END

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8809091 (NEWSPAGER CORP.) <br> * page 3, lines 19 - 37 * | 1, 2, 4, 5 | G08B3/10 <br> H04Q7/02 |
| A | * page 4, line 33 - page 5, line 16 * <br> * page 5, line 33 - page 7, line 10 * <br> * page 8, lines 10 - 25 * <br> * page 10, line 12 - page 14, line 5 * <br> * page 17, line 22 - page 18, line 29 * <br> --- | 3, 6 | |
| X | EP-A-155678 (N.E.C.) <br> * page 2, line 12 - page 4, line 7 * | 1, 2, 4, 5 | |
| A | * page 5, line 3 - page 8, line 5 * <br> * page 13, line 20 - page 15, line 15 * <br> * page 23, line 20 - page 27, line 3 * <br> --- | 3, 6 | |
| A | EP-A-189089 (N.E.C.) <br> * page 3, lines 1 - 25 * <br> * page 5, line 15 - page 7, line 14 * <br> * page 8, line 25 - page 10, line 9 * <br> * page 14, line 1 - page 16, line 7 * <br> * page 19, line 20 - page 20, line 4 * <br> * page 21, line 5 - page 23, line 13 * <br> --- | 1-6 | TECHNICAL FIELDS SEARCHED (Int. Cl.5 ) |
| A | US-A-4438433 (SMOOT ET AL.) <br> * column 1, line 55 - column 2, line 16 * <br> ----- | 3, 6 | G08B <br> H04Q |

The present search report has been drawn up for all claims

| Place of search | Date of completion of the search | Examiner |
|---|---|---|
| THE HAGUE | 17 JULY 1990 | GERLING J.C.J. |

EPO FORM 1503 03.82 (P0401)